(19) Europäisches Patentamt

European Patent Office

Office européen des brevets

(11) **EP 4 407 896 A1**

(12) **DEMANDE DE BREVET EUROPEEN**

(43) Date de publication:
**31.07.2024 Bulletin 2024/31**

(21) Numéro de dépôt: **24154015.2**

(22) Date de dépôt: **25.01.2024**

(51) Classification Internationale des Brevets (IPC):
**H04B 10/70** *(2013.01)* **H04B 10/532** *(2013.01)*
**H04J 14/06** *(2006.01)*

(52) Classification Coopérative des Brevets (CPC):
**H04B 10/532; H04J 14/06**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **25.01.2023 FR 2300705**

(71) Demandeur: **Marbeuf Conseil et Recherche
75009 Paris (FR)**

(72) Inventeur: **SANGLE-FERRIERE, Bruno
75016 paris (FR)**

(74) Mandataire: **Cabinet Nony
11 rue Saint-Georges
75009 Paris (FR)**

(54) **SYSTÈME DE COMMUNICATION OPTIQUE PAR MODIFICATION DE POLARISATION**

(57) Système (S) de communication optique comportant :
• Un émetteur de lumière polarisée comportant une source (1) configurée pour générer au moins un photon polarisé selon une polarisation déterminée sur un chemin de propagation ;
• Un modificateur de polarisation complexe (2) placé sur le chemin de propagation de la lumière générée par l'émetteur, configuré pour modifier la direction de la polarisation de ladite lumière et introduire un déphasage entre deux composantes perpendiculaires du champ électrique de la lumière ;
• Un récepteur (3) disposé sur le chemin de propagation de la lumière, en aval du modificateur de polarisation complexe (2), comportant un instrument de mesure (35) permettant de mesurer le l'ellipticité et l'orientation de la polarisation de la lumière selon le formalisme de Jones.

[Fig 1]

Fig. 1

EP 4 407 896 A1

## Description

La présente invention concerne les méthodes de communication optique, et plus particulièrement celles utilisant la polarisation de la lumière.

## Technique antérieure

La transmission d'informations par fibres optiques se fait actuellement essentiellement grâce à des trains d'ondes électromagnétiques, ou par envoi de photons transmis à travers une fibre optique.

Le multiplexage est une technique permettant de faire circuler plusieurs flux d'information par un même faisceau lumineux ou une même fibre optique. Celle-ci peut se faire en faisant transiter des ondes de longueurs d'ondes différentes mais aussi par division de polarisation par exemple en faisant transiter une information avec une onde polarisée linéairement dans une première direction de polarisation de champ électrique et une autre information par une onde polarisée linéairement dans la direction perpendiculaire à la dite première direction de polarisation, ou encore une information avec une onde polarisée circulairement dans un sens et une autre information par une onde polarisée circulairement dans l'autre sens.

La quantité d'information pouvant circuler grâce au multiplexage reste limitée.

Il existe donc un besoin pour perfectionner la transmission d'importantes quantités d'informations.

## Exposé de l'invention

L'invention vise à répondre à tout ou partie de ce besoin et a pour objet, selon un premier de ses aspects, un système de communication optique comportant :

- Un émetteur de lumière polarisée comportant une source configurée pour générer au moins un photon polarisé selon une polarisation prédéterminée sur un chemin de propagation ;
- Un modificateur de polarisation complexe placé sur le chemin de propagation de la lumière générée par l'émetteur, configuré pour modifier la direction de la polarisation de ladite lumière et introduire un déphasage entre deux composantes perpendiculaires du champ électrique de la lumière ;
- Un récepteur disposé sur le chemin de propagation de la lumière, en aval du modificateur de polarisation complexe, comportant un instrument de mesure permettant de mesurer l'ellipticité et l'orientation de la polarisation de la lumière selon le formalisme de Jones.

Le système selon l'invention permet de transmettre entre le modificateur de polarisation et le récepteur des informations soit de type discret, soit des valeurs continues.

Les photons émis par l'émetteur sont de préférence non intriqués.

Le système de communication optique comporte de préférence un unique récepteur.

L'état de polarisation du photon n'est pas nécessairement binaire comme l'est celui d'un spin. L'état de polarisation peut notamment être représenté sur la sphère de Jones qui caractérise l'orientation et l'ellipticité de la polarisation : une polarisation peut en effet être linéaire, le champ électrique étant toujours parallèle à un axe perpendiculaire à la direction de propagation du photon, ou circulaire, le champ électrique tournant autour de cet axe, ou entre les deux : le champ électrique parcourant une ellipse atour de l'axe de propagation durant une période de l'onde.

Plusieurs informations peuvent être communiquées par le système de communication, chaque information étant transmise par un flux lumineux polarisé selon une polarisation spécifique du formalisme de Jones.

Le flux lumineux peut être long, par exemple durer une milliseconde ou une micro seconde et avoir une puissance importante, par exemple de plusieurs Watt. Alternativement le flux lumineux est un photon ou une succession de photons, par exemple 1000 photons qui, s'ils sont séparés chacun d'environ 10 périodes c'est-à-dire 10 fois la longueur d'onde forment un flux lumineux d'une puissance d'environ 0,1 mW durant environ 30ps.

Par modificateur de polarisation, il est entendu un composant permettant d'une part de modifier la direction de la polarisation d'un angle prédéterminé et d'autre part d'introduire un déphasage entre deux composantes perpendiculaires du champ électrique de chaque photon, par exemple selon les axes propres du modificateur de polarisation.

## Emetteur

L'émetteur peut être configuré pour émettre la lumière avec une polarisation prédéterminé, notamment avec une polarisation linéaire selon un axe prédéterminé.

L'émetteur peut comporter une source configurée pour émettre la lumière avec une polarisation aléatoire, et, en aval de cette source, un polariseur linéaire configuré pour sélectionner une direction de polarisation du photon.

Le polariseur linéaire peut comporter un matériau optiquement transparent biréfringent, par exemple du niobate de lithium ou du rutile.

L'émetteur peut comporter une source de photons uniques, configurée pour émettre des photons un par un séparés temporellement par une durée de l'ordre de quelques périodes de la lumière, par exemple 10 ou 100.

L'émetteur peut être configuré pour générer successivement une pluralité de photons.

L'émetteur peut comporter une horloge.

## Modificateur de polarisation

Le modificateur de polarisation est avantageusement agencé pour que son utilisateur puisse choisir l'état de polarisation dans lequel le photon est envoyé vers le récepteur parmi l'une quelconque des polarisations possibles telles que définies par le formalisme de Jones, notamment parmi un ensemble de polarisations elliptiques (aussi dites « ellipsoïdales »).

Dans un mode de réalisation, la polarisation linéaire d'un flux lumineux peut être transformée en polarisation ellipsoïdale telle que représentée par le formalisme de Jones en modifiant dans un premier temps l'orientation de la polarisation d'un flux lumineux de polarisation linéaire et de direction connue, répartissant ainsi de façon prédéterminée le champ électrique selon un axe x et un axe y perpendiculaire à l'axe x, puis, dans un deuxième temps en modifiant la phase du champ électrique selon l'une de deux directions perpendiculaires, par exemple l'axe y.

Le modificateur de la polarisation peut comporter un modificateur de l'ellipticité de la polarisation, sur le chemin de propagation, entre l'émetteur et le récepteur.

Le modificateur de la polarisation comporte de préférence un modificateur de la direction de la polarisation disposé sur le chemin de propagation, entre l'émetteur et le modificateur de l'ellipticité de la polarisation ou entre le modificateur de l'ellipticité de la polarisation et le récepteur.

Par exemple, si une lumière polarisée linéairement a sa polarisation tournée d'un angle $\theta$ par rapport à l'axe x et si $\phi$ est le déphasage entre le champ électrique selon l'axe x et le champ électrique selon l'axe y, $\omega$ étant la pulsation du champ électrique, les composantes $E_x$ et $E_y$ de champ électrique sont :

$$E_x = E \, Cos\,(\theta)\, Cos\,(\omega t)$$

$$E_y = E \, Sin\,(\theta)\, Cos\,(\omega t + \phi)$$

## Modificateur de la direction de la polarisation :

Le modificateur de la direction de la polarisation peut comporter une lame demi-onde, notamment une lame demi-onde d'orientation variable

En variante, le modificateur de la direction de la polarisation peut comporter une première lame quart-d'onde configurée pour modifier la polarisation linéaire du flux lumineux incident sur le modificateur de la direction de la polarisation en polarisation circulaire, de préférence suivie d'une seconde lame quart-d'onde transformant la polarisation circulaire en polarisation linéaire du flux lumineux orientée selon un axe dépendant de la direction de l'axe de la seconde lame quart d'onde.

L'orientation de l'une au moins des deux lamesquart d'onde peut être variable.

Une rotation de l'axe de la seconde lame quart-d'onde permet de modifier la direction de la polarisation linéaire du flux lumineux. Si la lame est une lame demi-onde, la rotation de la lame demi-onde permet de modifier la direction de la polarisation linéaire du flux lumineux.

Alternativement, l'orientation de la première lame quart-d'onde peut être modifiée, celle de la seconde lame quart-d'onde étant fixe, ou les orientations des deux lames quart-d'onde peuvent être modifiées.

La rotation d'une lame quart-d'onde ou d'une lame demi-onde est obtenue par exemple par asservissement mécanique à un capteur ou à un dispositif commandé électriquement permettant sa rotation, par exemple en frottant sur un axe mis en mouvement par un matériau piézo-électrique ou par un dispositif de moteur électrique, par exemple à courant continu.

L'inertie de rotation d'une lame quart d'onde pouvant être importante, les flux lumineux peuvent être envoyés successivement vers différentes lames quart-d'onde dont les orientations auront été ajustées préalablement par exemple par un dispositif de rotation mécanique, ce qui permet de laisser le temps de modifier la direction de chacune des lames quart-d'onde entre deux passages de flux lumineux.

En variante, le modificateur de la direction de la polarisation peut comporter des cristaux liquides torsadés (twisted nematics) et la modification de la direction de la polarisation peut être obtenue par passage du flux lumineux à travers les cristaux liquides au-dessus desquels et en-dessous desquels se trouvent des électrodes transparentes qui contrôlent le pouvoir rotatif desdits cristaux liquides.

En variante, le modificateur de la direction de la polarisation peut comporter des matériaux chiraux ou rotatifs. Le modificateur de la direction de la polarisation peut comporter une lame ou un prisme en matériau chiral ou rotatif affectant la rotation de la polarisation d'un angle dépendant de l'endroit par lequel le flux lumineux pénètre dans ledit matériau chiral ou rotatif. Le matériau peut notamment être disposé entre des matériaux dont le ou les indices de réfraction sont ajustables dynamiquement.

Alternativement, le modificateur de polarisation peut comporter plusieurs modificateurs de la direction de la polarisation, chacun permettant des angles de rotation de la polarisation différents. Lesdits plusieurs modificateurs de la direction de la polarisation sont par exemples fixes. En variante, l'orientation d'au moins un, notamment tous, desdits modificateurs de la direction de la polarisation peut être modifiable.

Le flux lumineux peut être envoyé vers divers modificateurs de la direction de la polarisation faisant tourner la polarisation d'angles prédéfinies puis ramenant le flux lumineux en sortie de ces modificateurs de la direction de la polarisation en un seul flux.

Le modificateur de polarisation peut comporter une ou plusieurs premières lames ou un ou plusieurs premiers prismes dont le ou les indices de réfraction sont ajustables dynamiquement. Le flux lumineux peut être envoyé, en un premier point, sur la ou les plusieurs premières lames ou le ou les plusieurs premiers prismes, et le flux lumineux peut ressortir de la ou des premières lames ou du ou des premiers prismes en un second point d'ordonnée et/ou d'abscisse différente du premier point.

Le modificateur de polarisation peut comporter en aval de la ou des plusieurs premières lames ou du ou des plusieurs premiers prismes, un dispositif intermédiaire, notamment comportant un matériau au moins en partie chiral ou rotatif. Le flux lumineux ressort notamment de la ou des premières lames ou du ou des premiers prismes en pénétrant un dispositif intermédiaire, faisant tourner la direction de polarisation du flux lumineux d'un angle dépendant du point par lequel le flux lumineux pénètre ledit dispositif intermédiaire. Le dispositif intermédiaire peut comporter une lame ou un prisme.

Le modificateur de polarisation peut comporter en aval du dispositif intermédiaire, une ou plusieurs secondes lames ou un ou plusieurs seconds prismes, et éventuellement une ou plusieurs troisièmes lames ou un ou plusieurs troisièmes prismes, dont le ou les indices de réfraction sont ajustables dynamiquement et pour lequel le ou les indices de réfraction sont notamment ajustés symétriquement par rapport à ceux de la ou des premières lames ou du ou des premiers prismes. Le flux lumineux sortant du dispositif intermédiaire peut pénétrer la ou les plusieurs secondes lames ou le ou les plusieurs seconds prismes, et éventuellement la ou les plusieurs troisièmes lames ou le ou les plusieurs seconds prismes.

Le flux lumineux peut ressortir de la ou des secondes lames ou du ou des seconds prismes selon la même direction que si l'indice de réfraction de la ou des premières lames ou du ou des premiers prismes et de la ou des secondes lames ou du ou des seconds prismes avaient tous les deux une valeur fixée et non dynamique.

Le dispositif intermédiaire est par exemple composé de deux prismes symétriques accolés, de même indice de réfraction, mais ayant des pouvoirs chiraux ou rotatifs différents, le premier des deux prismes ayant par exemple un pouvoir chiral ou rotatif et le second n'en ayant pas ou faisant tourner la polarisation dans le sens contraire de la rotation imposée par le premier prisme.

L'un des deux prismes peut comporter un matériau chiral, par exemple des nanoparticules de séléniure de cadmium (CdsE) de diamètre notamment compris entre 1,4 nm et 2,4 nm, tel que décrit dans l'article de Visheratina, Anastasia, and Nicholas A. Kotov. "Inorganic nanostructures with strong chiroptical activity." (CCS Chemistry 2.3 (2020): 583-604.).

L'autre des deux prismes est de préférence non chiral ou alternativement est de chiralité inverse à celle dudit premier prisme. La rotation de la direction de polarisation du flux lumineux traversant un matériau chiral étant proportionnelle à l'épaisseur traversée dudit matériau chiral, la rotation de la direction de polarisation du flux lumineux traversant le dispositif intermédiaire dépend du point de pénétration du flux lumineux dans le dispositif intermédiaire.

Alternativement le dispositif intermédiaire peut comporter un matériau « rotatif », tel qu'une lame quart-d'onde suivie d'une juxtaposition de lames quart d'onde disposées de telle sorte qu'une onde polarisée linéairement selon l'axe de la première tranche du matériau ressorte de la deuxième tranche du matériau avec une polarisation tournée d'un angle prédéterminé.

Alternativement le dispositif intermédiaire peut comporter un matériau « rotatif », tel qu'une juxtaposition de lames demi-ondes disposées de telle sorte qu'une onde polarisée linéairement selon l'axe de la première tranche du matériau ressorte de la deuxième tranche du matériau avec une polarisation tournée d'un angle prédéterminé.

Alternativement le dispositif intermédiaire peut comporter un matériau « rotatif », tel qu'une juxtaposition de cylindres comportant des matériaux chiraux de concentrations différentes.

Les lames ou prismes dont le ou les indices de réfraction sont ajustables dynamiquement comportent par exemple des cristaux liquides ou une ou deux cellules Pockels disposés entre deux électrodes transparentes.

Les cellules Pockels étant des matériaux biréfringents dont la biréfringence est affectée par le champ électrique, la ou les premières lames ou le ou les premiers prismes comportant une cellule Pockels sont de préférence orientés de telle sorte que le flux lumineux incident est polarisé linéairement selon l'axe du matériau le plus sensible au champ électrique. Il suffit alors d'une seule cellule Pockels.

La ou les secondes lames ou le ou les seconds prismes, et la ou les troisièmes lames ou la ou les troisièmes prismes, comportant une cellule Pockels, sont de préférence disposés de telle sorte que leurs axes selon lesquels la polarisation est la plus sensible au champ électrique soient perpendiculaires les uns aux autres, de telle sorte que le flux lumineux incident sur la ou les secondes lames ou le ou les seconds prismes ressorte de la ou des troisièmes lames ou du ou des troisièmes prismes dévié de la même façon, quelle que soit la direction de polarisation du champ électrique de la lumière incidente sur la ou les secondes lames ou le ou les seconds prismes.

Les cellules Pockels nécessitent la plupart du temps de grandes différences de potentiel pour fonctionner ainsi qu'une épaisseur de l'ordre du centimètre. De préférence une tension alternative de 4V entre les deux électrodes est utilisée par mm d'épaisseur de la cellule Pockels, à des fréquences par exemple comprises ente 3,765MHz et 3,775Mhz pour une cellule Pockels comportant du niobate de lithium, comme décrit dans l'article « longitudinal Piezoelectric resonant photoelastic modulator for effiicent intensity modulation at mégahertz fréquences » paru dans le journal Nature communications le 22 mars 2022. La variation de l'indice de réfraction dépend alors de ladite fréquence et de ladite différence de potentiel.

Modificateur de l'ellipticité de la polarisation

Le modificateur de l'ellipticité de la polarisation permet de déphaser d'un angle prédéterminé la composante du champ électrique du flux lumineux selon l'un de deux axes fixes.

De préférence, le modificateur de l'ellipticité de la polarisation comporte une première lame ou un premier prisme biréfringent agencé pour partager le faisceau en deux ondes électromagnétiques de polarisation linéaire, l'une selon un premier axe, l'autre selon un second axe, et de préférence une lame à retard d'indice de réfraction variable disposée sur le second axe.

La lame à retard permet de faire acquérir à l'onde électromagnétique orientée selon le second axe un déphasage prédéterminé par rapport à l'onde électromagnétique orientée selon le premier axe, avant de lui être de nouveau mélangée par une nouvelle lame ou prisme biréfringent permettant de réunir selon un même axe les deux ondes électromagnétiques dont les champs de polarisation sont perpendiculaires.

La lame à retard peut comporter une cellule Pockels ou un matériau non linéaire. L'indice de réfraction variable de la cellule permet de choisir le déphasage imposé à l'onde électromagnétique orientée selon le second axe.

Le modificateur de l'ellipticité de la polarisation peut être une cellule Pockels.

La cellule Pockels est par exemple constituée de monopotassium de phosphate KDP ($KH_2PO_4$), de phosphate de dideutérium de potassium DKDP ($KD_2PO_4$), ou de niobate de lithium ($LiNbO_3$). La cellule Pockels peut en variante être constituée d'autres milieux non centrosymétriques tels que des polymères polarisés par champ électrique, ou placée entre deux électrodes perpendiculaires au rayon lumineux incident, le faisceau lumineux incident arrivant polarisé rectilignement et la biréfringence de la cellule variant selon la différence de potentiel appliquée entre les deux dites électrodes. Comme expliqué dans l'article paru dans la revue Nature Communication du 22 mars 2022 intitulé Longitudinal piezoelectric resonant photoelastic modulator for efficient intensity modulation at mégahertz frequencies, la variation de la biréfringence de la cellule peut être obtenue par l'application d'une tension alternative de 2V appliquée entre les deux électrodes, à des fréquences par exemple comprises ente 3,765MHz et 3,78Mhz pour une cellule Pockels de 0,5mm d'épaisseur constituée de niobate de lithium, le choix de la fréquence entre ces limites décidant de la biréfringence de ladite cellule de Pockels.

Le déphasage entre les composantes de polarisation du photon selon deux axes perpendiculaires, déphasage introduit par le modificateur de l'ellipticité de la polarisation, peut être choisi parmi des déphasages espacés de 9° entre -90°et +81°.

Amplificateur

Le récepteur peut comporter, en amont de l'instrument de mesure, un amplificateur optique permettant de démultiplier le photon en conservant son état de polarisation

De préférence, l'amplificateur optique est un amplificateur à fibre dopée.

L'amplificateur optique est par exemple un amplificateur à fibre dopée à l'erbium (EDFA), par exemple de 4m de long, dans lequel le photon à amplifier est introduit en même temps qu'une onde amplificatrice de longueur d'onde plus courte, ce qui permet d'amplifier l'onde correspondant au photon introduit, avec des gains pouvant être de l'ordre de 37db/m.

En variante, l'amplificateur optique est un amplificateur à fibres dopées (DFA) utilisant un dopant diffèrent de l'erbium.

En variante, l'amplificateur optique peut être un amplificateur à cavité verticale (VCSOA) ou un amplificateur de type semi-conducteur (SOA).

Instrument de mesure

La mesure de la polarisation moyenne des photons permet de détecter dans quel état de polarisation sont les photons et d'en déduire l'information transmise.

L'instrument de mesure du récepteur peut comporter au moins un détecteur de photons agencé pour mesurer l'intensité du flux lumineux selon deux axes perpendiculaires et le déphasage de la lumière entre ces deux mêmes axes.

De préférence, l'instrument de mesure du récepteur comporte une succession de lames semi-réfléchissantes, notamment disposées en aval de l'amplificateur optique, lesdites lames dirigeant de préférence le flux lumineux, dans des proportions prédéfinies, vers des instruments permettant notamment de caractériser l'ellipticité de sa polarisation

Lesdits instruments permettant de caractériser l'ellipticité de la polarisation sont notamment configurés pour :

- mesurer l'intensité de la composante du champ électrique de la lumière selon un premier axe x,
- mesurer l'intensité de la composante du champ électrique de la lumière selon un second axe y perpendiculaire au premier axe x,
- mesurer le déphasage entre la lumière selon l'axe x et la lumière selon l'axe y,
- et, de préférence, mesurer le déphasage entre la lumière selon les deux directions perpendiculaires x'et y', x' étant la bissectrice de x et y.

La mesure de l'intensité du flux de photons selon les deux axes perpendiculaires se fait par exemple par la séparation du flux de photons selon les deux axes perpendiculaires par une lame ou un prisme biréfringent, suivi de deux capteurs d'intensité lumineuse placés en sortie de ladite lame ou dudit prisme, respectivement sur chacun des deux axes.

La mesure de l'ellipticité de la polarisation, i.e. la mesure du déphasage de la lumière entre ses composantes selon les deux axes perpendiculaires, se fait par exemple par la séparation de la lumière selon les deux axes perpendiculaires par une lame ou un prisme biréfringent. Cette séparation peut être suivie, pour la lumière polarisée selon l'un des deux axes, d'une rotation de cet axe de polarisation de 90°, par exemple grâce à un matériau rotatif ou chiral ou par la succession de deux lames quart-d'ondes afin de générer deux flux lumineux de polarisations linéaires de même direction puis d'une projection conjointe de ces deux flux lumineux à travers des fentes d'Young, sur un écran, les interférence des deux flux lumineux dessinant des franges dont les positions dépendent dudit déphasage.

Alternativement les deux flux lumineux peuvent interagir entre eux grâce à un autre interféromètre, par exemple un interféromètre mélangeant les deux flux lumineux en un flux unique, à l'aide d'une lame semi réfléchissante traversée de biais par l'un des deux flux et reflétée de biais pour l'autre des deux flux, le flux unique étant projeté sur un écran, ou une caméra, afin d'y mesurer son intensité, de la même façon qu'un interféromètre de Michelson.

### Récepteur

Le récepteur comporte de préférence une horloge, les horloges de l'émetteur et du récepteur étant de préférence synchronisées entre elles.

Entre l'amplificateur et les instruments de mesure, le récepteur peut comporter une succession de plusieurs lentilles et/ou miroirs permettant d'agrandir la section du faisceau lumineux.

### Sélecteur

Un ou plusieurs sélecteurs peuvent être configurés pour envoyer les flux lumineux vers au moins un modificateur de la direction de la polarisation.

Un ou plusieurs sélecteurs peuvent permettre, en sortie du ou des dispositifs de modification de la direction de la polarisation, de réunir les flux lumineux selon un même axe, par exemple dans un guide.

Un ou plusieurs sélecteurs peuvent comporter un miroir dont la direction de l'axe est commandée par exemple par un dispositif électrique. En variante, un ou plusieurs sélecteurs peuvent comporter un prisme ou une lame, dans un matériau dont l'indice de réfraction dépend d'un champ électrique, par exemple des cristaux liquides ou une cellule Pockels, ou dans un matériau transparent d'indice de réfraction non linéaire. Un flux lumineux supplémentaire, par exemple transversal et de préférence de longueur d'onde différente de celle du flux lumineux transmettant une information, peut faire varier l'indice de réfraction dudit matériau non linéaire et peut ainsi commander l'emplacement et éventuellement la direction de sortie du flux lumineux dudit matériau.

Un ou plusieurs sélecteurs peuvent être intégrés en des pièces uniques. Par exemple un sélecteur peut avoir une entrée unique pour la lumière et plusieurs sorties possibles pour ladite lumière, la sortie empruntée par la lumière dépendant de la tension utilisée pour actionner ledit sélecteur.

### Transmission des photons

Les photons peuvent être transmis de l'émetteur vers le récepteur en champ libre ou non, à travers l'espace, l'atmosphère, par une fibre optique ou une combinaison de ces moyens.

Des lentilles peuvent être utilisées pour la transmission du flux lumineux, notamment pour la transmission à travers l'espace ou l'atmosphère. Le cas échéant, on dispose de préférence des couches anti-reflet sur lesdites lentilles. La taille des lentilles utilisées est de préférence adaptée à la longueur de la transmission spatiale ou atmosphérique des flux lumineux.

Pour ajuster la direction d'émission d'un flux lumineux porteur de signaux, notamment pour la transmission spatiale ou atmosphérique, on peut utiliser un miroir à conjugaison de phase qui réfléchissent la lumière émise à l'émetteur. Un émetteur de lumière laser peut par exemple scanner un espace afin d'y détecter le récepteur, le récepteur lui réfléchissant la lumière émise grâce au miroir à conjugaison de phase et la direction du flux lumineux porteur de signaux étant alors ajustée pour être parallèle ou confondue avec la direction de la lumière réfléchie par les miroirs conjugués.

La lumière laser émise par l'émetteur de lumière laser peut être de longueur d'onde proche de la longueur d'onde du flux lumineux émis par l'émetteur, transmettant une information, et introduite dans un objectif utilisé par le flux lumineux transmettant une information par un prisme dichroïque.

Dans une variante, un flux lumineux servant à la visée peut être émis parallèlement au flux lumineux transmettant une information mais éloigné par exemple de quelques centimètres pour être réfléchi par un miroir à conjugaison de phase.

Dans une autre variante, on peut ne pas utiliser de miroir à conjugaison de phase et viser le récepteur ou une cible proche de celui-ci, l'information suivant laquelle la cible est reçue étant communiquée par un autre moyen de communication, notamment par signal hertzien, ou par voie optique, le miroir conjugué étant alors agencé pour moduler dynamiquement la réflexion.

La zone à scanner peut être identifiée par reconnaissance cartographique de la zone dans laquelle ledit récepteur est susceptible de se trouver.

**Couche anti-reflet**

Des couches anti-reflet peuvent être disposées aux interfaces entre les milieux transparents adjacents d'indices différents traversés par les flux lumineux et/ou aux interfaces des prismes et/ou lames biréfringentes traversées par les flux lumineux. Les couches anti-reflet permettent d'éviter la perte de flux lumineux.

Les couches anti-reflet sont adaptées de préférence à ou aux indices des matériaux, et/ou à ou aux angles d'incidence et directions de polarisation du flux lumineux qui doit le traverser, et/ou à la longueur d'onde du flux lumineux.

**Filtres dichroïques**

Le récepteur comporte de préférence un ou plusieurs filtres dichroïques permettant de ne laisser passer que les flux lumineux d'une longueur d'onde donnée, notamment un prisme constitué d'un matériau transparent dispersif.

Le ou les filtres sont de préférence disposés devant le ou les instruments de mesure, notamment si les indices de réfraction des matériaux non linéaires sont modifiés par application de flux lumineux puissants.

**Procédé de communication photonique**

L'invention a pour objet, selon un autre de ses aspects, un procédé de communication photonique transmettant une information codée sur un flux lumineux, utilisant le système décrit précédemment, comportant les étapes consistant à :

(1) Générer un flux lumineux polarisé de polarisation prédéterminée à partir d'un émetteur, le flux lumineux étant émis vers un récepteur,
(2) Coder l'information sur le flux lumineux en introduisant, grâce à un modificateur de polarisation disposé entre l'émetteur et le récepteur, une modification de la direction de la polarisation du flux lumineux et un déphasage entre les composantes de polarisation du flux lumineux selon les deux axes propres du modificateur de polarisation, la modification de la direction et le déphasage dépendant de l'information à transmettre,
(3) Mesurer le déphasage moyen entre les composantes de polarisation du flux lumineux selon deux axes perpendiculaires ainsi que la proportion de l'intensité lumineuse selon ces mêmes axes, et déterminer selon ces mesures l'information transmise par l'émetteur.

De préférence, le procédé de communication photonique comporte entre l'étape (2) et l'étape (3), notamment si le flux lumineux n'est composé que d'un ou quelques photons : dupliquer le photon en un flux de photons au récepteur, grâce à un dispositif d'amplification, la lumière ainsi créée ayant conservé l'état de polarisation du photon reçu au récepteur,

La même information peut être codée sur un nombre prédéterminé N de photons émis successivement par l'émetteur.

Le déphasage entre les composantes de polarisation du flux lumineux selon deux axes perpendiculaires peut être choisi parmi des déphasages espacés de 9° entre -90°et +81°, et/ou la direction de polarisation du flux lumineux peut être choisie parmi des directions espacées de 9° entre -90° et +81°, l'état de polarisation du flux lumineux étant alors choisi parmi 361 états distincts de polarisation.

Le récepteur peut considérer avoir reçu l'information après avoir mesuré à l'étape (4) un nombre n prédéterminé de photons portant la même information, reçus par le récepteur.

L'émetteur peut transmettre un message codé comportant une pluralité d'informations, notamment une pluralité de lettres, de préférence codées chacune sur un ou plusieurs photons.

Une information transmise, notamment une lettre transmise, codée sur un ou plusieurs photons, peut être séparée d'une autre information transmise, notamment d'une autre lettre transmise, par la transmission d'une information de séparation, notamment d'une lettre de séparation, codée sur un ou plusieurs photons. De préférence la transmission de deux informations identiques, notamment deux lettres identiques, est séparée par la transmission d'une information de séparation, notamment d'une lettre de séparation.

**Dispositif de modification de la direction de la polarisation**

L'invention a pour objet, selon un autre de ses aspects, un dispositif de modification de la direction de la polarisation d'un flux lumineux, le dispositif appartenant par exemple à un système de communication optique, notamment au système de communication optique décrit ci-dessus, le dispositif comportant :

- une ou plusieurs premières lames ou un ou plusieurs premiers prismes dont le ou les indices de réfraction sont ajustables dynamiquement,
- en aval de la ou des plusieurs premières lames ou de ou des plusieurs premiers prismes, un dispositif intermédiaire agencé pour faire tourner la direction de polarisation du flux lumineux d'un angle dépendant du point par lequel le flux lumineux pénètre ledit dispositif intermédiaire, et
- en aval du dispositif intermédiaire, une ou plusieurs secondes lames ou un ou plusieurs seconds prismes, et éventuellement une ou plusieurs troisièmes lames ou un ou plusieurs troisièmes prismes, dont le ou les indices de réfraction sont ajustables dynamiquement.

Le dispositif de modification de la direction de polarisation permet de faire tourner la direction de polarisation d'un flux lumineux polarisé linéairement sous l'effet d'une commande électrique générant des champs électriques.

Le dispositif intermédiaire peut comporter une lame ou un prisme.

Le dispositif intermédiaire peut comporter un matériau au moins en partie chiral ou rotatif.

Le ou les indices de réfraction de la ou des plusieurs secondes lames ou du ou des plusieurs seconds prismes, et éventuellement de la ou des plusieurs troisièmes lames ou du ou des plusieurs troisièmes prismes, sont notamment ajustés symétriquement par rapport à ceux de la ou des premières lames ou du ou des premiers prismes.

**Dispositif de modification de la direction de la polarisation**

L'invention a pour objet, selon un autre de ses aspects, un dispositif de modification de la direction de la polarisation d'un flux lumineux, le dispositif appartenant par exemple à un système de communication optique, notamment au système de communication optique décrit ci-dessus, le dispositif comportant plusieurs couches superposées :

- une première couche étant un cristal de niobate de lithium soumis à un premier champ électrique Eci d'intensité U dans une direction y induisant une variation $\Delta n_x$ de son indice de réfraction pour les flux lumineux polarisés dans une direction x perpendiculaire à la direction y, et une variation $\Delta n_y$ de son indice de réfraction pour les flux lumineux polarisés dans la direction y,
- une seconde couche étant un second cristal de niobate de lithium orienté à 90° autour de l'axe x par rapport à la première couche, soumis à un second champ électrique $E_{C2}$ de même intensité U que le premier perpendiculaire au plan xy, le champ $E_{C2}$ induisant la variation $\Delta n_x$ de son indice de réfraction pour les flux lumineux polarisés dans la direction y et la variation $\Delta n_y$ de son indice de réfraction pour les flux lumineux polarisés dans la direction x,
- une troisième couche étant une lame quart-d'onde pour le flux lumineux issu de la seconde couche qui pénètre dans la troisième couche en un point d'entrée, la position du point d'entrée sur la troisième couche dépendant de l'intensité des champs électriques Eci et $E_{C2}$,
- une quatrième couche étant une succession de lames quart-d'onde orientées de telle sorte que la lumière issu de la troisième couche y pénètre polarisée circulairement et en ressort polarisée linéairement selon une direction dépendant de son point d'entrée dans la quatrième couche,
- une cinquième et une sixième couches de même nature et orientation que les première et seconde couches respectivement, et soumises à des champs électriques respectivement dans la direction y et dans la direction perpendiculaire au plan xy, dont les intensités U' égales sont ajustées en fonction des champs électriques Eci et $E_{C2}$, afin que le rayon lumineux sortant de la sixième couche sorte en un point invariant quel que soit la valeur de l'intensité U des champs électriques Eci et $E_{C2}$.

Les première, deuxième, cinquième et sixième couches (81 ; 82 ; 85 ; 86) peuvent être des cristaux liquides ou des cellules Pockels disposées entre deux électrodes transparentes, ou les indices de réfraction des première, deuxième, cinquième et sixième couches (81 ; 82 ; 85 ; 86) peuvent être modulés par l'application d'une lumière intense et les première, deuxième, cinquième et sixième couches (81 ; 82 ; 85 ; 86) peuvent être composées de matériaux d'indice de réfraction non linéaires.

**Dispositif de réception d'un flux lumineux**

L'invention a pour objet, selon un autre de ses aspects, un dispositif de réception d'un flux lumineux, agencé pour mesurer l'ellipticité et l'orientation de la polarisation d'une lumière selon le formalisme de Jones, le dispositif appartenant par exemple à un système de communication optique, notamment au système de communication optique décrit ci-dessus, le dispositif comportant :

- un amplificateur, par exemple un amplificateur optique à fibre dopée, configuré pour amplifier la lumière, créant ainsi un flux lumineux,
- un dispositif optique comportant : deux miroir semi réfléchissants, un miroir, trois prismes, deux capteurs photosensibles, deux caméras et trois modificateurs de direction de polarisation,

  le premier miroir semi-réfléchissant étant configuré pour réfléchir et dévier une partie du flux lumineux, par exemple un tiers, en sortie de l'amplificateur, vers un premier prisme biréfringent séparant la lumière déviée polarisée en deux flux lumineux selon les deux axes propres du prisme, les deux flux lumineux étant envoyés respectivement vers des capteurs photos sensibles qui mesurent leur intensité respective,
  le second miroir semi-réfléchissant étant configuré pour réfléchir une partie du flux lumineux, par exemple la moitié, non réfléchi en sortie du premier miroir, et dévier ce flux réfléchi en direction d'un second prisme biréfringent séparant la lumière déviée polarisée en deux flux lumineux selon les deux axes propres du second prisme, le premier flux lumineux étant alors envoyé vers une première caméra pour illuminer sur une surface Si, le second flux étant envoyé vers un premier modificateur de direction de polarisation qui modifie la direction de polarisation du second flux de 90° avant d'envoyer ce flux vers la même surface Si de la première caméra, des franges d'interférences apparaissant alors sur la caméra, dont la position permet de mesurer le déphasage entre les flux orientés selon les deux axes propres du second prisme,

le second modificateur de direction de polarisation étant configuré pour que le flux lumineux non réfléchi par le second miroir semi-réfléchissant traverse le second modificateur de direction de polarisation qui modifie la direction de polarisation du flux de 45°,

le troisième miroir étant configuré pour réfléchir le flux lumineux ayant traversé le second modificateur de direction de polarisation, et dévier ce flux réfléchi en direction d'un troisième prisme biréfringent séparant la lumière déviée polarisée en deux flux lumineux selon les deux axes propres du troisième prisme, le premier flux lumineux étant envoyé vers une surface Si' d'une deuxième caméra, le second flux étant envoyé vers un troisième modificateur de direction de polarisation qui tourne la direction de polarisation du second flux de 90° avant d'envoyer ce flux vers la même surface Si' de la troisième caméra, des franges d'interférences apparaissant alors sur la caméra, ce qui témoigne du déphasage entre les flux orientés selon les deux axes propres du troisième prisme.

**Brève description des dessins**

L'invention pourra être mieux comprise à la lecture de la description détaillée qui va suivre, d'exemples de mise en oeuvre non limitatifs de celle-ci, et à l'examen du dessin annexé, sur lequel :

[Fig 1] la figure 1 représente, de manière schématique et partielle, un système de communication selon l'invention,

[Fig 2A] la figure 2A représente, de manière schématique et partielle, un photon polarisé linéairement,

[Fig 2B] la figure 2B représente, de manière schématique et partielle, deux photons polarisés circulairement,

[Fig 3] la figure 3 représente, de manière schématique et partielle, un modificateur de la direction de la polarisation selon l'invention,

[Fig 4] la figure 4 représente, de manière schématique et partielle, un dispositif faisant tourner l'axe de polarisation d'une lumière polarisée linéairement sous l'effet d'une commande électrique,

[Fig 5] la figure 5 représente de manière schématique et partielle, un modificateur de l'ellipticité de la polarisation selon l'invention, et

[Fig 6] la figure 6 représente de manière schématique et partielle, un récepteur selon l'invention.

**Description détaillée**

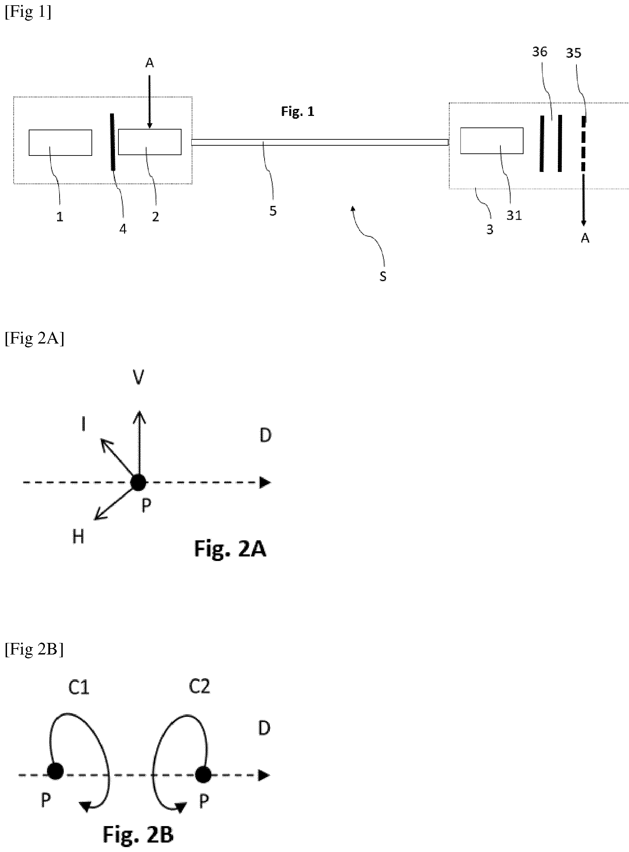

On a représenté à la figure 1, un système S de communication optique selon l'invention comportant un émetteur de flux lumineux, un modificateur de polarisation 2 et un récepteur 3.

L'émetteur de flux lumineux comporte une source 1 configurée pour émettre la lumière non polarisée, en direction d'un filtre polarisant 4, polarisant linéairement, par exemple verticalement, la lumière. En variante, la source 1 peut émettre une lumière polarisée linéairement en direction du modificateur de polarisation 2, sans qu'il y n'ait de filtre de polarisation 4 dans le système S.

En aval du filtre de polarisation 4, sur le trajet de la lumière, le modificateur de polarisation 2 introduit une modification de la direction de la polarisation et un déphasage entre les composantes de polarisation de la lumière selon deux axes propres du modificateur de polarisation 2, l'angle de rotation de la direction de polarisation et la valeur du déphasage introduit correspondant par exemple à une lettre A.

En sortie du modificateur de polarisation 2, la lumière est envoyée dans une fibre optique 5, en direction du récepteur 3.

Le récepteur 3 comporte un amplificateur optique 31 et un ou plusieurs instruments de mesure 35, pour mesurer l'intensité du champ électrique correspondant au flux lumineux selon deux axes perpendiculaires ainsi que le déphasage entre les composantes dudit champ électrique selon ces axes, et en déduire l'information transmise, par exemple la lettre A. Le récepteur 3 peut comporter en outre un dispositif optique 36 permettant d'orienter le flux lumineux amplifié en direction du ou des instruments de mesure.

La figure 2A illustre la polarisation linéaire *l* d'un photon P se déplaçant dans une direction D. La polarisation linéaire *l* se décompose dans cet exemple sur deux axes, l'un vertical V et l'autre horizontal H.

La figure 2B illustre la polarisation circulaire d'un photon P se déplaçant dans une direction D. La polarisation circulaire du photon P tourne autour de l'axe D, elle peut tourner dans le sens horaire comme la polarisation C1 ou dans le sens antihoraire comme la polarisation C2.

**Modificateur de la direction de polarisation**

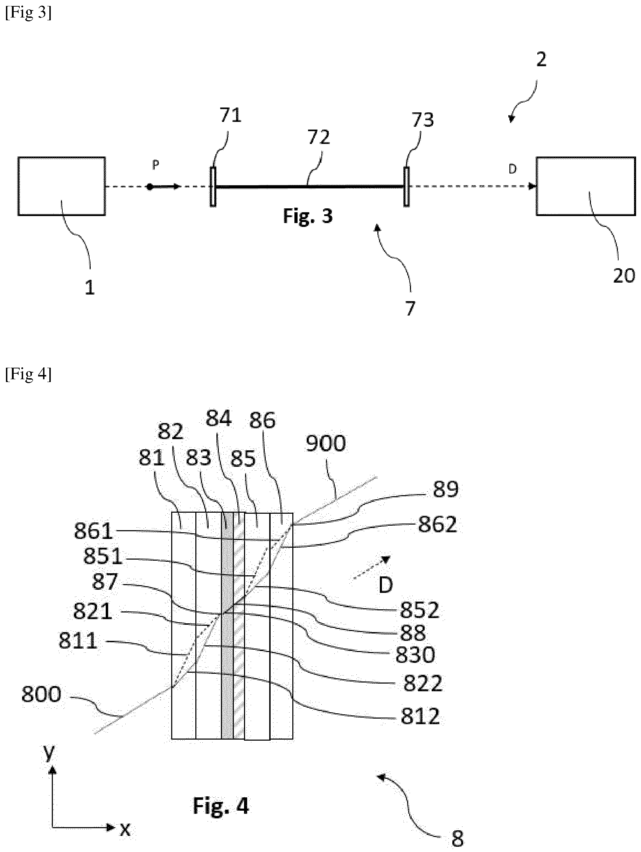

Le modificateur de polarisation 2 peut comporter un modificateur de la direction de la polarisation 7 ou 8 comme illustré sur les figures 3 et 4, sur le chemin du photon P polarisé linéairement, entre l'émetteur et un modificateur de l'ellipticité de la polarisation 20.

Dans un premier mode de réalisation illustré sur la figure 3, le modificateur de la direction de la polarisation 7 comporte une première lame quart-d'onde 71 permettant de transformer la polarisation linéaire du photon P en une polarisation circulaire. Le modificateur de la direction de la polarisation 7 comporte en aval de la lame 71, un milieu transparent 72, suivi d'une seconde lame quart-d'onde 73 permettant de transformer la polarisation circulaire du photon P en une polarisation linéaire selon une direction déterminée.

La rotation de la lame quart-d'onde 73 est obtenue par exemple par asservissement mécanique à un capteur ou à un dispositif commandé électriquement permettant sa rotation, par exemple en frottant sur un axe mis en mouvement par un matériau piézo-électrique ou par un dispositif de moteur électrique, par exemple à courant continu.

Dans un second mode de réalisation illustré sur la figure 4, le modificateur de la direction de la polarisation 8 fait tourner la direction de polarisation d'un photon polarisé linéairement sous l'effet d'une commande électrique générant des champs électriques.

Le modificateur de la direction de la polarisation 8 comporte plusieurs couches superposées.

La première couche 81 est par exemple un cristal de niobate de lithium soumis à un premier champ électrique Eci dans la direction y, induisant une variation $\Delta n_x$ de son indice de réfraction pour les ondes polarisées dans la direction x et une variation $\Delta n_y$ de son indice de réfraction pour les ondes polarisées dans la direction y.

Lorsque la lumière incidente 800 pénètre dans cette première couche 81, elle est séparée en deux rayons 811 et 812.

La seconde couche 82 est par exemple un second cristal de niobate de lithium orienté à 90° autour de l'axe x par rapport à la première couche, soumis à un second champ électrique $E_{C2}$ de même intensité U que le premier, perpendiculaire au plan de la figure 4. Le champ $E_{C2}$ induit la variation $\Delta n_x$ de son indice de réfraction pour les ondes polarisées dans la direction y et la variation $\Delta n_y$ de son indice de réfraction pour les ondes polarisées dans la direction x. Lorsque les rayons 811 et 812 pénètrent dans cette seconde couche 82, ils changent à nouveau de direction pour devenir les rayons 821 et 822.

Les deux rayons 821 et 822 sont réunis en un rayon unique 830 à la sortie de la couche 82, lorsqu'il pénètre dans la couche 83 au point 87. La position du point 87 sur la couche 83 dépend de l'intensité des champs électriques Eci et $E_{C2}$. La direction du rayon 830 est indépendante de l'intensité U des champs électrique Ec1 et EC2 qui restent égales.

La couche 83 est par exemple une lame quart-d'onde pour les rayons y pénétrant avec la direction du rayon 830 issu de la seconde couche 82. Le rayon lumineux 830 pénètre en sortie de la couche 83 en un point d'entrée 88 sur une succession de lames quart-d'onde 84 orientées de telle sorte que la lumière y pénètre polarisée circulairement selon la direction du rayon 830 et en ressort polarisée linéairement selon une direction dépendant de son point d'entrée 88.

Le rayon lumineux sortant de la couche 84 traverse les couches 85 et 86 et sort de la couche 86 au point 89 pour former le rayon 900. Les couches 85 et 86 sont de même nature et orientation que les première et seconde couches 81 et 82 respectivement, et sont soumises à des champs électriques respectivement dans la direction y et dans la direction perpendiculaire au plan de la figure 4, dont les intensités U' égales sont ajustées en fonction des champs électriques Eci et $E_{C2}$, afin que le rayon lumineux 900 sorte en un point invariant 89 quel que soit la valeur de l'intensité U des champs électriques Eci et $E_{C2}$.

Les couches 81, 82, 85 et 86 sont par exemple des cristaux liquides ou des cellules Pockels disposées entre deux électrodes transparentes. Alternativement, les indices de réfraction des couches 81, 82, 85 et 86 sont modulés par l'application d'une lumière intense et les couches 81, 82, 85 et 86 sont composées de matériaux d'indice de réfraction non linéaires.

**Modificateur de l'ellipticité de la polarisation**

Le modificateur de la polarisation 2 peut comporter un modificateur de l'ellipticité de la polarisation 20.

Le modificateur de l'ellipticité de la polarisation 20 permet d'introduire un déphasage entre les deux composantes de polarisation selon deux axes perpendiculaires, d'un photon.

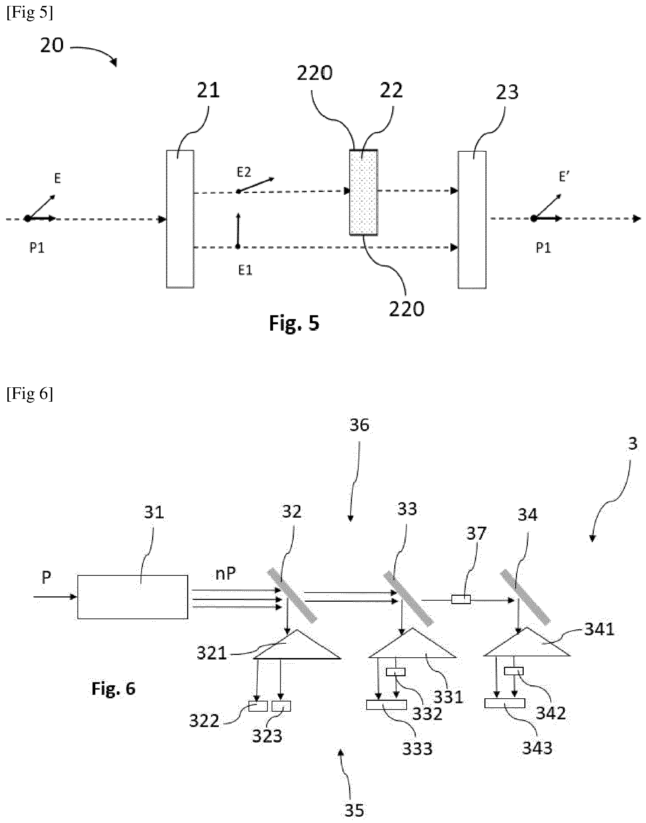

Le un modificateur de l'ellipticité de la polarisation 20 illustré sur la figure 5 comporte une première lame en cristal biréfringent 21 partageant le faisceau de lumière P1 en deux ondes électromagnétiques, de polarisation linéaire E1 et E2, l'une selon un premier axe, l'autre selon un second axe perpendiculaire au premier.

Le un modificateur de l'ellipticité de la polarisation 20 comporte en aval de cette lame 21, une cellule Pockels 22, par exemple en niobate de lithium, disposée sur le second axe. La cellule Pockels 22 est traversée par un champ électrique ajustable généré par des électrodes 220, par exemple perpendiculaire au sens de propagation de la lumière. La cellule Pockels permet de faire acquérir à l'onde orientée selon le second axe, de polarisation E2, un déphasage prédéterminé par rapport à l'onde orientée selon le premier axe, de polarisation E1.

Enfin, le un modificateur de l'ellipticité de la polarisation 20 comporte en aval de la cellule Pockels 22, une seconde lame en cristal biréfringent 23 qui réunit selon un même axe les deux ondes E1 et E2, ce qui crée un unique faisceau P1.

**Récepteur**

On a illustré sur la figure 6, un récepteur 3 comportant un amplificateur 31 permettant d'amplifier une lumière P, créant ainsi un flux lumineux nP. L'amplificateur 31 est par exemple un amplificateur optique à fibre dopée.

Le récepteur 3 comporte par ailleurs un dispositif optique comportant deux miroir semi réfléchissants 32 et 33 et un miroir 34. Le premier miroir semi-réfléchissant 32 réfléchit et dévie une partie du flux lumineux nP,

par exemple un tiers, en sortie de l'amplificateur 31, vers un premier prisme biréfringent 321. Le prisme biréfringent 321 sépare la lumière déviée polarisée en deux flux lumineux selon les deux axes propres du prisme 321. Les deux flux lumineux sont ensuite envoyés respectivement vers des capteurs photos sensibles 322 et 323 qui mesurent leur intensité respective.

Un second miroir semi-réfléchissant 33 réfléchit une partie du flux lumineux, par exemple la moitié, non réfléchi en sortie du premier miroir 32, et dévie ce flux réfléchi en direction d'un second prisme biréfringent 331. Le prisme biréfringent 331 sépare la lumière déviée polarisée en deux flux lumineux selon les deux axes propres du prisme 331. Le premier flux lumineux est alors envoyé vers une caméra 333 pour illuminer sur une surface Si, le second flux est envoyé vers un modificateur de direction de polarisation 332 qui modifie la direction de polarisation du second flux de 90° avant d'envoyer ce flux vers la même surface Si de la caméra 333. Des franges d'interférences apparaissent alors sur la caméra, dont la position permet de mesurer le déphasage entre les flux orientés selon les deux axes propres du prisme 331.

Le flux lumineux non réfléchi par le second miroir semi-réfléchissant 33 traverse ensuite un modificateur de direction de polarisation 37 qui modifie la direction de polarisation du flux de 45°.

Un troisième miroir réfléchissant 34 réfléchit alors le flux lumineux ayant traversé le modificateur de direction de polarisation 37, et dévie ce flux réfléchi en direction d'un troisième prisme biréfringent 341. Le prisme biréfringent 341 sépare la lumière déviée polarisée en deux flux lumineux selon les deux axes propres du prisme 341. Le premier flux lumineux est alors envoyé vers une surface Si' d'une caméra 343, le second flux est envoyé vers un modificateur de direction de polarisation 342 qui tourne la direction de polarisation du second flux de 90° avant d'envoyer ce flux vers la même surface Si' de la caméra 343. Des franges d'interférences apparaissent alors sur la caméra, ce qui témoigne du déphasage entre les flux orientés selon les deux axes propres du prisme 341.

**Revendications**

1. Système (S) de communication optique comportant :

   • Un émetteur de lumière polarisée comportant une source (1) configurée pour générer au moins un photon polarisé selon une polarisation prédéterminée sur un chemin de propagation ;
   • Un modificateur de polarisation complexe (2) placé sur le chemin de propagation de la lumière générée par l'émetteur, configuré pour modifier la direction de la polarisation de ladite lumière et introduire un déphasage entre deux composantes perpendiculaires du champ électrique de la lumière ;
   • Un récepteur (3) disposé sur le chemin de propagation de la lumière, en aval du modificateur de polarisation complexe (2), comportant un instrument de mesure (35) permettant de mesurer l'ellipticité et l'orientation de la polarisation de la lumière selon le formalisme de Jones.

2. Système selon la revendication 1, l'émetteur étant configuré pour émettre la lumière avec une polarisation prédéterminée, notamment avec une polarisation linéaire, l'émetteur comportant notamment, en aval de la source (1), un polariseur linéaire (4) configuré pour sélectionner une direction de polarisation du photon, et/ou l'émetteur étant configuré pour générer successivement une pluralité de photons.

3. Système selon l'une quelconque des revendications précédentes, le modificateur de la polarisation (2) comportant un modificateur de l'ellipticité de la polarisation (20), disposé sur le chemin de propagation, entre l'émetteur et le récepteur (3), en particulier le modificateur de la polarisation (2) comportant un modificateur de la direction de la polarisation (7 ; 8), disposé sur le chemin de propagation, entre l'émetteur et le modificateur de l'ellipticité de la polarisation (20) ou entre le modificateur de l'ellipticité de la polarisation (20) et le récepteur (3).

4. Système selon la revendication précédente, le modificateur de la direction de la polarisation (7) comportant une première lame quart-d'onde (71) configurée pour modifier la polarisation linéaire du flux lumineux incident sur le modificateur de la direction de la polarisation (7) en polarisation circulaire, suivie d'une seconde lame quart-d'onde (73) transformant la polarisation circulaire en polarisation linéaire du flux lumineux orientée selon un axe dépendant de la direction de l'axe de la seconde lame quart d'onde, ou
le modificateur de la direction de la polarisation (8) comportant :

   - une ou plusieurs premières lames ou un ou plusieurs premiers prismes dont le ou les indices de réfraction sont ajustables dynamiquement,
   - en aval de la ou des plusieurs premières lames ou du ou des plusieurs premiers prismes, un dispositif intermédiaire, notamment comportant un matériau au moins en partie chiral ou rotatif, et
   - en aval du dispositif intermédiaire, une ou plusieurs secondes lames ou un ou plusieurs seconds prismes, et éventuellement une ou plusieurs troisièmes lames ou un ou plusieurs troisièmes prismes, dont le ou les indices de réfraction sont ajustables dynamiquement et pour lequel le ou les indices de réfraction sont notamment ajustés symétriquement par rapport à ceux de la ou des premières lames ou du ou des premiers prismes.

5. Système selon l'une quelconque des revendications précédentes et la revendication 4, le modificateur de l'ellipticité de la polarisation (20) comportant une première lame ou prisme biréfringent (21) partageant le faisceau en deux ondes électromagnétiques de polarisation linéaire, l'une (E1) selon un premier axe, l'autre (E2) selon un second axe, et une lame à retard d'indice de réfraction variable disposée sur le second axe (22).

6. Système selon l'une quelconque des revendications précédentes, l'instrument de mesure (35) du récepteur (3) comportant au moins un détecteur de photons (322 ; 323 ; 333 ; 343), agencé pour mesurer l'intensité du flux lumineux selon deux axes perpendiculaires et le déphasage de la lumière entre ces deux mêmes axes.

7. Système selon l'une quelconque des revendications précédentes, le récepteur comportant un amplificateur optique (31) en amont de l'instrument de mesure (35) du récepteur (3), et
l'instrument de mesure (35) du récepteur (3) comportant une succession de lames semi-réfléchissantes (32 ; 33 ; 34) disposées en aval de l'amplificateur optique (31), lesdites lames (32 ; 33 ; 34) dirigeant le flux lumineux, dans des proportions prédéfinies, vers des instruments permettant de caractériser l'ellipticité de sa polarisation, et/ou l'amplificateur optique (31) étant un amplificateur à fibre dopée.

8. Procédé de communication photonique transmettant une information codée (A) sur un flux lumineux, utilisant le système de l'une quelconque des revendications 1 à 7, comportant les étapes consistant à :

(1) Générer un flux lumineux polarisé de polarisation prédéterminée à partir d'un émetteur, le flux lumineux étant émis vers un récepteur (3),
(2) Coder l'information sur le flux lumineux en introduisant, grâce à un modificateur de polarisation disposé entre l'émetteur et le récepteur, une modification de la direction de la polarisation du flux lumineux et un déphasage entre les composantes de polarisation du flux lumineux selon les deux axes propres du modificateur de polarisation, la modification de la direction et le déphasage dépendant de l'information à transmettre,
(3) Mesurer le déphasage moyen entre les composantes de polarisation du flux lumineux selon deux axes perpendiculaires ainsi que la proportion de l'intensité lumineuse selon ces mêmes axes, et déterminer selon ces mesures l'information transmise par l'émetteur.

9. Procédé selon la revendication précédente, comportant entre l'étape (2) et l'étape (3), notamment si le flux lumineux n'est composé que d'un ou quelques photons : dupliquer le photon en un flux de photons au récepteur (3), grâce à un dispositif d'amplification (31), la lumière ainsi créée ayant conservé l'état de polarisation du photon reçu au récepteur (3).

10. Procédé selon l'une des revendications 8 et 9, le déphasage entre les composantes de polarisation du flux lumineux selon deux axes perpendiculaires étant choisi parmi des déphasages espacés de 9° entre -90° et +81°, et/ou la direction de polarisation du flux lumineux étant choisie parmi des directions espacées de 9° entre - 90° et +81°, l'état de polarisation du flux lumineux étant alors choisi parmi 361 états distincts de polarisation.

11. Procédé selon l'une quelconque des revendications 8 à 10, la même information (A) étant codée sur un nombre prédéterminé N de photons émis successivement par l'émetteur, en particulier le récepteur considérant avoir reçu l'information après avoir mesuré à l'étape (4) un nombre prédéterminé n de photons reçus par le récepteur (3) portant la même information, et/ou

l'émetteur transmettant un message codé comportant une pluralité d'informations (A), notamment une pluralité de lettres (A), codées chacune sur un ou plusieurs photons, en particulier une information transmise (A), notamment une lettre transmise (A), codée sur un ou plusieurs photons, étant séparée d'une autre information transmise, notamment d'une autre lettre transmise, par la transmission d'une information de séparation, notamment d'une lettre de séparation, codée sur un ou plusieurs photons,
de préférence la transmission de deux informations identiques, notamment deux lettres identiques, étant séparée par la transmission d'une information de séparation, notamment d'une lettre de séparation.

12. Dispositif de modification de la direction de la polarisation d'un flux lumineux appartenant au système de communication optique décrit dans l'une quelconque des revendications 1 à 7, le dispositif comportant :

- une ou plusieurs premières lames ou un ou plusieurs premiers prismes dont le ou les indices de réfraction sont ajustables dynamiquement,
- en aval de la ou des plusieurs premières lames ou de ou des plusieurs premiers prismes, un dispositif intermédiaire agencé pour faire tourner la direction de polarisation du flux lumineux d'un angle dépendant du point par lequel le flux lumineux pénètre ledit dispositif intermédiaire, et
- en aval du dispositif intermédiaire, une ou plusieurs secondes lames ou un ou plusieurs seconds prismes, et éventuellement une ou plusieurs troisièmes lames ou un ou plusieurs troisièmes prismes, dont le ou les indices de réfraction sont ajustables dynamiquement.

**13.** Dispositif selon la revendication précédente, le dispositif intermédiaire comportant un matériau au moins en partie chiral ou rotatif, et/ou le ou les indices de réfraction de la ou des plusieurs secondes lames ou du ou des plusieurs seconds prismes étant ajustés symétriquement par rapport à ceux de la ou des premières lames ou du ou des premiers prismes.

**14.** Dispositif de modification de la direction de la polarisation (8) d'un flux lumineux (800) appartenant au système de communication optique décrit dans l'une quelconque des revendications 1 à 7, le dispositif comportant plusieurs couches (81 ; 82 ; 83 ; 84 ; 85 ; 86) superposées :

- une première couche (81) étant un cristal de niobate de lithium soumis à un premier champ électrique Eci d'intensité U dans une direction y induisant une variation $\Delta n_x$ de son indice de réfraction pour les flux lumineux polarisés dans une direction x perpendiculaire à la direction y, et une variation $\Delta n_y$ de son indice de réfraction pour les flux lumineux polarisés dans la direction y,
- une seconde couche (82) étant un second cristal de niobate de lithium orienté à 90° autour de l'axe x par rapport à la première couche, soumis à un second champ électrique $E_{C2}$ de même intensité U que le premier perpendiculaire au plan xy, le champ $E_{C2}$ induisant la variation $\Delta n_x$ de son indice de réfraction pour les flux lumineux polarisés dans la direction y et la variation $\Delta n_y$ de son indice de réfraction pour les flux lumineux polarisés dans la direction x,
- une troisième couche (83) étant une lame quart-d'onde pour le flux lumineux issu de la seconde couche (82) qui pénètre dans la troisième couche (83) en un point d'entrée (87), la position du point d'entrée (87) sur la troisième couche (83) dépendant de l'intensité des champs électriques Eci et $E_{C2}$,
- une quatrième couche (84) étant une succession de lames quart-d'onde orientées de telle sorte que la lumière issu de la troisième couche (83) y pénètre polarisée circulairement et en ressort polarisée linéairement selon une direction dépendant de son point d'entrée (88) dans la quatrième couche (84),

- une cinquième et une sixième couches (85 ; 86) de même nature et orientation que les première et seconde couches (81 ; 82) respectivement, et soumises à des champs électriques respectivement dans la direction y et dans la direction perpendiculaire au plan xy, dont les intensités U' égales sont ajustées en fonction des champs électriques Eci et $E_{C2}$, afin que le rayon lumineux sortant de la sixième couche (86) sorte en un point invariant (89) quel que soit la valeur de l'intensité U des champs électriques Eci et $E_{C2}$,

en particulier les première, deuxième, cinquième et sixième couches (81 ; 82 ; 85 ; 86) étant des cristaux liquides ou des cellules Pockels disposées entre deux électrodes transparentes, ou les indices de réfraction des première, deuxième, cinquième et sixième couches (81 ; 82 ; 85 ; 86) étant modulés par l'application d'une lumière intense et les première, deuxième, cinquième et sixième couches (81 ; 82 ; 85 ; 86) étant composées de matériaux d'indice de réfraction non linéaires.

**15.** Dispositif de réception d'un flux lumineux, agencé pour mesurer l'ellipticité et l'orientation de la polarisation d'une lumière (P) selon le formalisme de Jones, le dispositif appartenant au système de communication optique décrit dans l'une quelconque des revendications 1 à 7, le dispositif comportant :

- un amplificateur (31), par exemple un amplificateur optique à fibre dopée, configuré pour amplifier la lumière (P), créant ainsi un flux lumineux (nP),
- un dispositif optique comportant : deux miroir semi réfléchissants (32 ; 33), un miroir (34), trois prismes (321 ; 331 ; 341), deux capteurs photosensibles (322 ; 323), deux caméras ( 333 ; 343) et trois modificateurs de direction de polarisation (37 ; 332 ; .342),
le premier miroir semi-réfléchissant (32) étant configuré pour réfléchir et dévier une partie du flux lumineux (nP), par exemple un tiers, en sortie de l'amplificateur (31), vers un premier prisme biréfringent (321) séparant la lumière déviée polarisée en deux flux lumineux selon les deux axes propres du prisme (321), les deux flux lumineux étant envoyés respectivement vers des capteurs photos sensibles (322 ; 323) qui mesurent leur intensité respective,
le second miroir semi-réfléchissant (33) étant configuré pour réfléchir une partie du flux lumineux, par exemple la moitié, non réfléchi en sortie du premier miroir (32), et dévier ce flux réfléchi en direction d'un second prisme biréfringent (331) séparant la lumière déviée polarisée en deux flux lumineux selon les deux axes propres du second prisme (331), le premier flux lumineux étant alors envoyé vers une première caméra (333) pour illuminer sur une surface Si, le second flux étant envoyé vers un premier modificateur de direction de polarisation (332) qui modifie la direction de polarisation du second flux de 90° avant d'envoyer ce flux vers la même surface Si de la première caméra (333), des franges d'interférences apparaissant alors sur la caméra, dont la position permet de mesurer le déphasage entre les flux orientés selon les deux axes propres du second prisme (331),

le second modificateur de direction de polarisation (37) étant configuré pour que le flux lumineux non réfléchi par le second miroir semi-réfléchissant (33) traverse le second modificateur de direction de polarisation (37) qui modifie la direction de polarisation du flux de 45°,

le troisième miroir (34) étant configuré pour réfléchir le flux lumineux ayant traversé le second modificateur de direction de polarisation (37), et dévier ce flux réfléchi en direction d'un troisième prisme biréfringent (341) séparant la lumière déviée polarisée en deux flux lumineux selon les deux axes propres du troisième prisme (341), le premier flux lumineux étant envoyé vers une surface Si' d'une deuxième caméra (343), le second flux étant envoyé vers un troisième modificateur de direction de polarisation (342) qui tourne la direction de polarisation du second flux de 90° avant d'envoyer ce flux vers la même surface Si' de la troisième caméra (343), des franges d'interférences apparaissant alors sur la caméra, ce qui témoigne du déphasage entre les flux orientés selon les deux axes propres du troisième prisme (341).

[Fig 1]

Fig. 1

[Fig 2A]

Fig. 2A

[Fig 2B]

Fig. 2B

[Fig 3]

Fig. 3

[Fig 4]

Fig. 4

[Fig 5]

**Fig. 5**

[Fig 6]

**Fig. 6**

**Europäisches Patentamt**
**European Patent Office**
**Office européen des brevets**

# RAPPORT DE RECHERCHE EUROPEENNE

Numéro de la demande

EP 24 15 4015

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 8 385 548 B2 (NUCRYPT LLC [US]; KANTER GREGORY S [US]; WANG SHAWN [US]) 26 février 2013 (2013-02-26) | 1-4, 6-11,15 | INV. H04B10/70 H04B10/532 |
| Y | * alinéa [0045] - alinéa [0047]; figures 2-5 * * alinéas [0006], [0007], [0027], [0041] * ----- | 5,12-14 | H04J14/06 |
| Y | US 11 329 728 B1 (ADAMS JEFF CLARK [US] ET AL) 10 mai 2022 (2022-05-10) * colonne 21 - colonne 23; figure 8 * ----- | 12,13 | |
| Y | US 10 079 676 B2 (UNIV OKLAHOMA [US]) 18 septembre 2018 (2018-09-18) * colonne 21; figure 9 * ----- | 5 | |
| Y | US 5 381 253 A (SHARP GARY D [US] ET AL) 10 janvier 1995 (1995-01-10) * revendication 25 * ----- | 14 | |
| A | CN 101 299 101 B (SHENZHEN GRADUATE STUDENT ACADEMY HARBIN INST OF TECHNOLOGY) 2 juin 2010 (2010-06-02) * revendication 1 * ----- | 1,8 | DOMAINES TECHNIQUES RECHERCHES (IPC) H04B H04J |
| A | US 3 214 590 A (SCHACHTMAN MARSHALL G) 26 octobre 1965 (1965-10-26) * figure 2 * ----- | 1,8 | |

Le présent rapport a été établi pour toutes les revendications

| Lieu de la recherche | Date d'achèvement de la recherche | Examinateur |
|---|---|---|
| Munich | 10 juin 2024 | Borsier, Celine |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 15 4015

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-06-2024

| Document brevet cité au rapport de recherche | | Date de publication | Membre(s) de la famille de brevet(s) | | Date de publication |
|---|---|---|---|---|---|
| US 8385548 | B2 | 26-02-2013 | AUCUN | | |
| US 11329728 | B1 | 10-05-2022 | AUCUN | | |
| US 10079676 | B2 | 18-09-2018 | US | 2015016610 A1 | 15-01-2015 |
| | | | US | 2017208040 A1 | 20-07-2017 |
| | | | US | 2018198607 A1 | 12-07-2018 |
| US 5381253 | A | 10-01-1995 | AU | 664402 B2 | 16-11-1995 |
| | | | CA | 2123310 A1 | 27-05-1993 |
| | | | EP | 0612415 A1 | 31-08-1994 |
| | | | JP | H07504994 A | 01-06-1995 |
| | | | US | 5381253 A | 10-01-1995 |
| | | | WO | 9310477 A1 | 27-05-1993 |
| CN 101299101 | B | 02-06-2010 | AUCUN | | |
| US 3214590 | A | 26-10-1965 | AUCUN | | |

EPO FORM P0460

Pour tout renseignement concernant cette annexe : voir Journal Officiel de l'Office européen des brevets, No.12/82

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **VISHERATINA, ANASTASIA ; NICHOLAS A. KO-TOV.** Inorganic nanostructures with strong chiroptical activity. *CCS Chemistry,* 2020, vol. 2 (3), 583-604
- longitudinal Piezoelectric resonant photoelastic modulator for effiicent intensity modulation at mégahertz fréquences. *Nature communications,* 22 Mars 2022
- Longitudinal piezoelectric resonant photoelastic modulator for efficient intensity modulation at mégahertz frequencies. *Nature Communication,* 22 Mars 2022